(19) **Europäisches Patentamt**

**European Patent Office**

**Office européen des brevets**

(11) **EP 0 923 266 B1**

(12) **EUROPEAN PATENT SPECIFICATION**

(45) Date of publication and mention
of the grant of the patent:
**24.05.2006 Bulletin 2006/21**

(51) Int Cl.:
*H04Q 11/04* (2006.01)     *H04L 12/56* (2006.01)

(21) Application number: **98114185.6**

(22) Date of filing: **29.07.1998**

(54) **Radio channel assigning device and method thereof**

Funkkanalzuweisungseinrichtung und Verfahren dazu

Dispositif pour l'allocation de canaux radio et procédé relatif

(84) Designated Contracting States:
**DE FR GB**

(30) Priority: **09.12.1997 JP 33758897**

(43) Date of publication of application:
**16.06.1999 Bulletin 1999/24**

(73) Proprietor: **MITSUBISHI DENKI KABUSHIKI KAISHA**
**Chiyoda-ku**
**Tokyo 100-8310 (JP)**

(72) Inventors:
• **Kawabata, Takashi**
**Chiyoda-ku,**
**Tokyo 100-8310 (JP)**

• **Moritani, Yoichi**
**Chiyoda-ku,**
**Tokyo 100-8310 (JP)**

(74) Representative: **Pfenning, Meinig & Partner GbR**
**Patent- und Rechtsanwälte**
**Theresienhöhe 13**
**80339 München (DE)**

(56) References cited:
**EP-A- 0 755 164          EP-A- 0 810 808**

• **MASAHIRO UMEHIRA ET AL: "ATM WIRELESS ACCESS FOR MOBILE MULTIMEDIA: CONCEPT AND ARCHITECTURE" IEEE PERSONAL COMMUNICATIONS, IEEE COMMUNICATIONS SOCIETY, US, vol. 3, no. 5, 1 October 1996 (1996-10-01), pages 39-48, XP000635699 ISSN: 1070-9916**

## Description

Field of the Invention

The present invention is related to a radio channel assigning device and a radio channel assigning method used in wireless communications.

Description of the Prior Art

There is a need for a communication technology which is wide in bandwidth and used for various services, such as voice, data, video and multi-media services. In wire communications, ATM (Asynchronous Transfer Mode) has been designed to support these services. ATM is a switching technology which provides economically varying services such as CBR (Constant Bit Rate), rt-VBR (real time-Variable Bit Rate) and UBR (Unspecified Bit Rate), in specific quality of service (QoS) as required. Taking into consideration the affinity between the wire and wireless communications, it is necessary to design a radio ATM which is characterized by a wide-bandwidth transmission, adaptability to various services, a selection in QoS and the like.

For example, an article entitled "Discussion on Dynamic TDMA in the radio ATM", by Masahiro Umehira et al., SB-5-2, p.p.737-738, General Convention of the Electronic Information and Communication Institute Society, 1997, discloses the following requirements for the media access control (MAC) in the radio ATM:

(1) to be able to assign wireless, or radio channels efficiently in a wide range from low speed to high speed with a minimum delay;
(2) to be able to assign radio channels efficiently for data whose uplink- and downlink-assignment bandwidths are asymmetric, and for variable data such as CBR, VBR, ABR services:
(3) to be able to control QoS for every user and for every connection.

The article also discloses a MAC which satisfies the above requirements, a dynamic TDMA for dynamically controlling time-slot assignments in a short period of time.

In addition, Japanese Laid-open Publication No. 9-18435 discloses a wireless communication system which employs a dynamic TDMA for facilitating services such as CBR, VBR, ABR and the like.

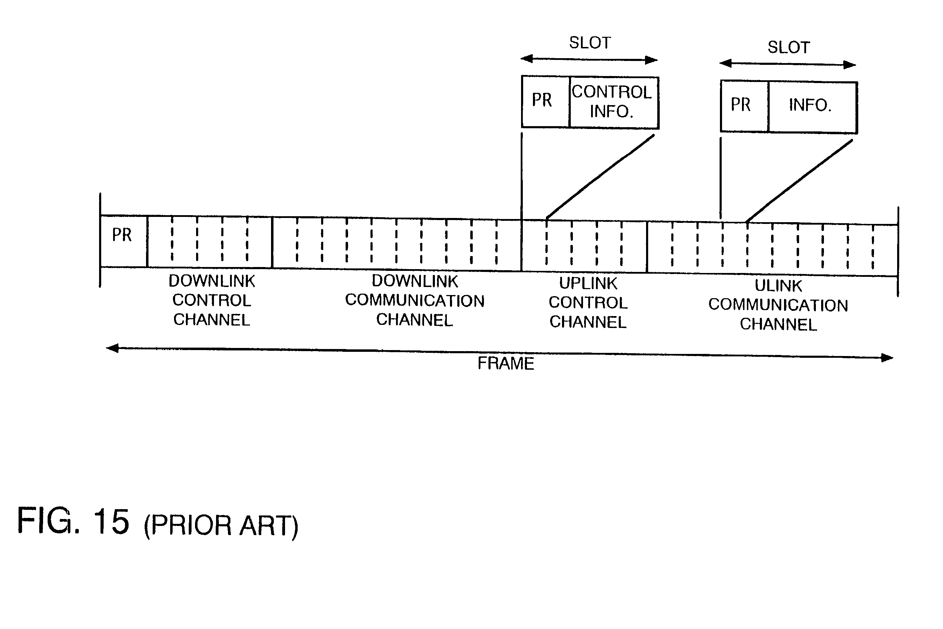

A wireless communication system employing a dynamic TDMA will now be explained. FIG. 15 illustrates an example of a frame configuration when dynamic TDMA is employed. In FIG. 15, a downlink control channel, an uplink control channel, a downlink communication channel and an uplink communication channel are multiplexed on the time axis in a single frequency, and each of these channels is divided into slots. For terminal stations which perform communications, at least one pair of the uplink and downlink control channels are assigned. The communication channels are dynamically assigned to the respective terminal stations in frame units, using information transmitted through the control channel. The respective terminal stations communicate using the assigned slots.

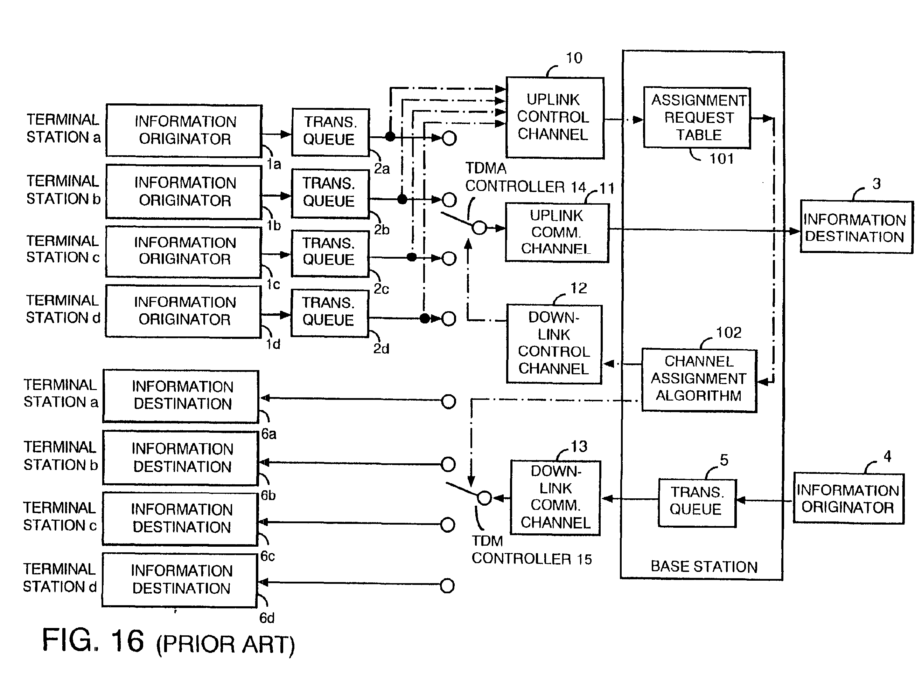

FIG. 16 illustrates one example of a system including a base station and terminal stations, which employs the dynamic TDMA. In FIG. 16, reference numerals 1a - 1d and 4 denote information originators; 2a - 2d, transmission queues for queueing transmission data from the information originators 1a - 1d; 3, an information destination of the transmission data transmitted from the transmission queues 2a - 2d; 5, a transmission queue for queueing the data transmitted from the information originator 4; and 6a - 6d, information destinations of the transmission data transmitted from the transmission queue 5. In this system, a terminal station a comprises the information originator la, the transmission queue 2a, and information destination 6a. Terminal stations b, c and d have the same construction as the terminal station a.

The system as shown in FIG. 16 further comprises an uplink control channel 10, an uplink communication channel 11, a downlink control channel 12, a downlink communication channel 13, a time-division multiple access (TDMA) controller 14, and a time-division multiplex (TDM) controller 15. An assignment request table 101 detects assignment requests collected from the respective terminal stations via the uplink control channel 10, and the collected information are stored in the table. A channel assignment algorithm 102 controls assignment capacity of communication channels for the respective terminal stations, based on the information stored in the assignment request table 101.

The operation of this system will be described below. In the system, data generated in the information originators 1a - 1d of the terminal stations are accumulated in the respective transmission queues 2a - 2d. The respective terminal stations then transmit assignment requests to the base station by using the uplink control channel 10, in accordance with data queued in the transmission queues 2a - 2d. In response to this, the base station detects the assignment requests transmitted from the respective terminal stations, and stores the associated information in the assignment request table 101. The channel assignment algorithm 102 refers to the assignment request table 101, and assigns a capacity of the communication channels, that is, slots, to the respective terminal stations. The assigned slots are identified to the respective terminal stations by the use of the downlink control channel 12, and the respective terminal stations transmit data via the uplink communication channel 11, based on this assignment. This kind of assigning method which dynamically changes slot assignment of the communication channels in a short period is called a dynamic slot assignment (DSA) or a dynamic bandwidth assignment (DBA).

The reference entitled "ATM Wireless Access for Multimedia: Concept and Architecture" by Masahiro Umehira et al, IEEE Personal Communications, October 1996, 1070-9916/96, pages 39 to 48, discloses a traffic shaping for variable input traffic by $Q_0S$ buffer control providing two buffers on the transmission side for time-sensitive and time-insensitive traffic. Time-sensitive ATM cells are transmitted prior to those that are time-insensitive.

WO 88/09969 discloses a process-to-processor communications protocol for a public service trunking system and discloses further a technique to monitor message acknowledgement. If a message goes unacknowledged for more than a predetermined time it is retransmitted.

The reference entitled "Distributed Queueing Request Update Multiple Access (DQRUMA) for Wireless Packet (ATM) Networks" (M. Karol et al., ICC 1995. pp. 1224 -1231) discloses a system in which the presence of data to be transmitted to a buffer of a terminal station is identified to a base station, and the base station gives the terminal station a transmission authorization for every slot.

In "Alternative Bandwidth Allocation Algorithms for Packet Video in ATM Networks" (S. Chowdhury et al.. INFOCOM. 1992. pp, 1061 -1068), DSA for dynamically assigning channel capacity is described. Assuming that a frame consists of S slots, the following assignment methods are explained.

(1) Fixed Assignment

In a case where a frame consists of S slots and the number of terminal stations is N, a slot Si is assigned to a terminal i in a fixed manner as shown in the equation below. However, since this method is not a dynamic slot assignment, its efficiency for variable data is poor.

$$Si = S / N \qquad\qquad (1)$$

(2) Assignment Based On Queue Size

Assuming that data Qi is queued in the transmission queue of a terminal i, assignment is made in proportion to Qi as shown in the equation below.

$$Si = S * Qi / \sum_{i=1}^{N} Qi \qquad\qquad (2)$$

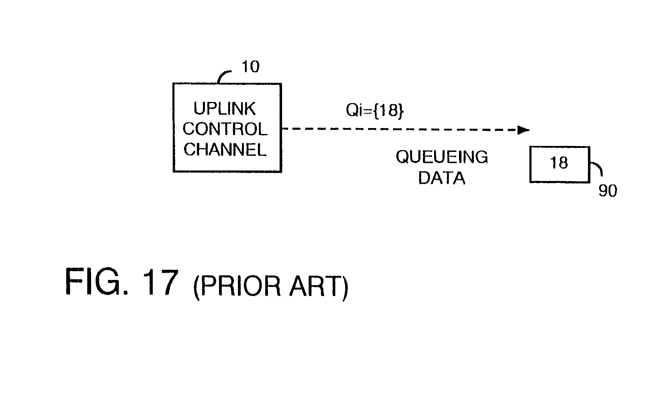

This method will be explained below with reference to FIG. 16. Assuming that the data Qi is queued in the transmission queues 2a - 2d of the terminal stations i (which corresponds to the terminal stations a - d in FIG. 16), the assignment request table 101 stores the amount of data Qi for the respective terminal stations. FIG. 17 illustrates the relationship between information to be transmitted via the uplink control channel 10 and the assignment request table 101, with respect to one terminal station. In FIG. 17, a reference numeral 90 denotes the portion of the assignment request table 101 for storing the information regarding to the terminal stations i, and this portion stores the queued data Qi. That is, when "18" as the amount of data is queued in the transmission queues of the terminal stations i, the information Qi = 18 is transmitted through the uplink control channel 10, and the assignment table 101 stores the information of "accumulated data 18" with regard to the terminal station i, as illustrated in FIG. 17. The channel algorithm 102 then refers to the assignment request table 101. and assigns the channel.

As an assignment method in which the number of slots constituting the frame changes, the following method is also described in the Chowdhury article.

(3) First-Come, First-Served Method

In this method, assignment takes place in the order of the request. If a particular terminal station makes a large amount of requests, it may become impossible to make assignments to the other terminal stations.

(4) Assignment Based On The Information Rate

In this method, assignment is done in proportion to a bit rate at which information is generated.

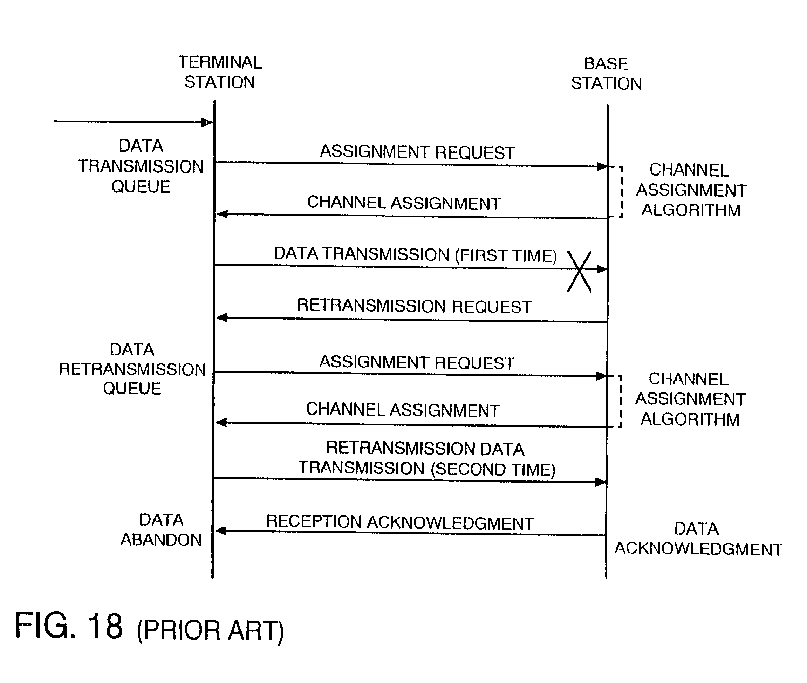

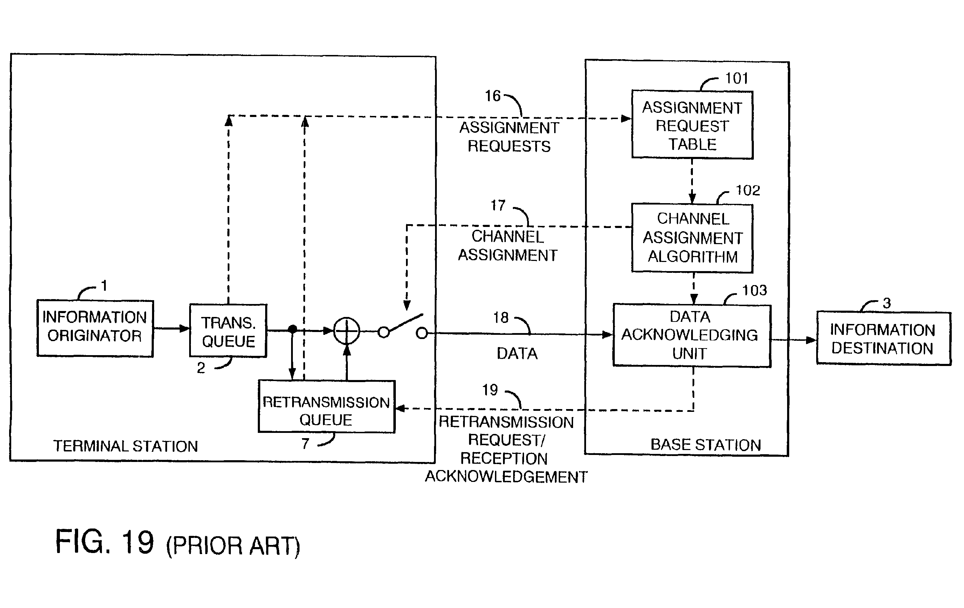

Conventional retransmission processing will be explained below. FIG. 18 is a sequence diagram illustrating exchange of data between one terminal station and the base station, and FIG. 19 shows a system configuration for performing the retransmission processing. In FIG. 19, a retransmission queue 7 accumulates data transmitted from the transmission queue 2 in preparation for the retransmission processing. Assignment requests 16 are sent from the transmission queue 2 and the retransmission queue 7, a channel assignment 17 is assignment which is assigned based on the channel assignment algorithm by referring to the assignment request table 101, and data 18 is transmitted according to the channel assignment 17. A data acknowledging unit 103 acknowledges the reception of the data 18 transmitted from the terminal station. A retransmission request/reception acknowledgement 19 is sent from the data acknowledgement unit 103 to the terminal station. Other elements of FIG. 19 are the same as those in FIG. 16.

Operation of the retransmission processing will be explained below with reference to FIGS. 18 and 19. Data generated in the information originator 1 of the terminal station is accumulated in the transmission queue 2. When the data is accumulated in the transmission queue 2, the terminal station sends the assignment request 16. The base station then detects the assignment request 16, and accumulates the information in the assignment request table 101. The channel assignment algorithm 102 refers to the assignment table 101, and transmits the channel assignment 17 to the terminal station. The terminal station therefore transmits the data 18 to the base station according to the channel assignment 17 transmitted from the base station. The data 18 remains to be accumulated in the retransmission queue 7 until the terminal station receives the reception acknowledgment from the base station, or until the terminal station abandons a normal transmission completion because of a time out.

After the data 18 is transmitted, the data acknowledging unit 103 acknowledges whether the data 18 arrives at the base station. In the example shown in FIG. 18, the first data transmission to the base station has failed for the reason such as poor channel conditions and the like. In this case, the data acknowledging unit 103 transmits the retransmission request 19 to the retransmission queue 7. Upon reception of the retransmission request 19, the retransmission queue 7 sends the assignment request 16 to the base station in order to request capacity required for the retransmission of the data. The base station transmits the channel assignment 17 based on the received assignment request 16, and, according to this channel assignment 17, the terminal station transmits the retransmission data 18 from the retransmission queue 7. The data acknowledging unit 103 then acknowledges whether the data 18 has arrived at the base station. If the reception is acknowledged, the reception acknowledgement 19 is transmitted to the retransmission queue 7. The terminal station therefore discards the corresponding data from the retransmission queue 7.

The technology described above is called ARQ (automatic retransmission request), in which communication is performed by acknowledging data and the data is automatically retransmitted when the reception of the data cannot be acknowledged. Usually, the channel assignment requests of the respective terminal stations are determined in conformity with the sum of data queued in the transmission queue and the retransmission queue of the terminal station, and the request is sent to the base station. In another method, the system is equipped with a channel dedicated to retransmission data, and the channel assignment is also performed separately.

In wireless communications, channel conditions between the terminal stations and the base station change due to fading and shadowing. The channel conditions are correlated with time, and poor channel conditions continue for a certain period of time. Because a conventional channel assignment method does not take channel conditions into account, it assigns a channel capacity to the terminal stations which are very difficult to communicate with due to poor channel conditions. In this situation, the probability of communication failure is high, thus causing a waste of the assigned channels and deterioration of efficiency of the entire system.

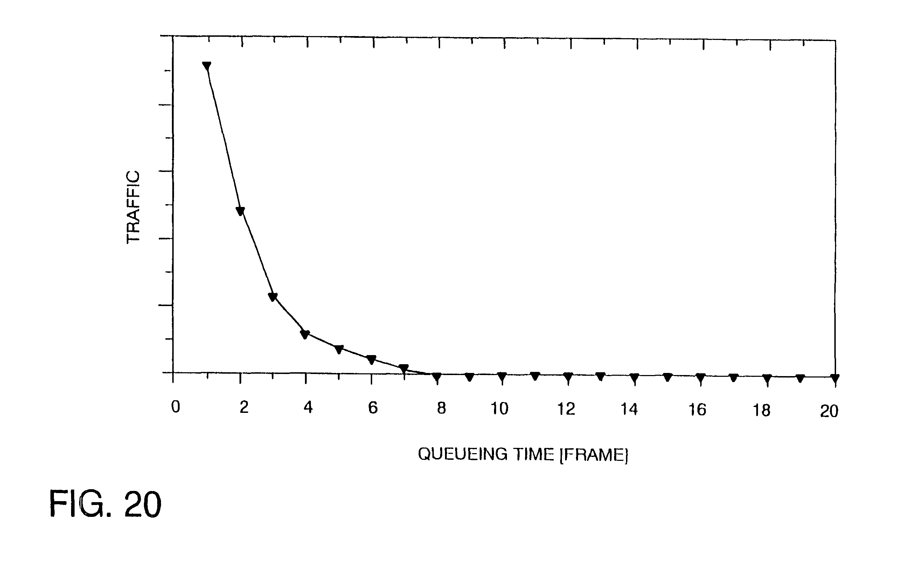

In addition, in the conventional channel assignment system, the assignment is done based on the amount of queued data in the queue of the terminal station. However, if acceptable delay time is determined based on quality of service (QoS), a delay time needs to be taken into consideration. FIG. 20 illustrates an example for measuring a time during which each data remains queued in the transmission queue, and for obtaining probability distribution for every queueing time. In FIG. 20, the abscissa is the queueing time expressed by the number of frames, the ordinate is the amount of data.

For the most of the data queued in the transmission queue, the queueing time is short, however, a small amount of the data remains in the transmission queue for a long period of time. If there is some data which remains in the queue for a long time, the delay time becomes longer, therefore the delay time acceptable for the quality of service will not be satisfied. Accordingly, in a case where data with the same queueing time has a different acceptable delay time, it is preferable to assign channel capacity to the data with a shorter acceptable delay time preferentially at a priority higher than those with a longer acceptable delay time. In a case where data with the same acceptable delay time has a different queueing time, it may be preferable to preferentially assign channel capacity to the data with a longer queueing time.

In data communications. ARQ is used for controlling errors. When the base station cannot receive the communication data from the terminal stations, the base station requests retransmission of the data from the terminal stations.

In a conventional channel assignment method, a channel assignment request is sent to the base station after the terminal stations receive the retransmission request. The base station then assigns channel capacity based on the request sent from the terminal stations. This raises a problem that the period from the time when the base station requires the retransmission to the time when the actual retransmission is performed by the terminal stations becomes longer, thus causing a delay.

The present invention has been made to solve the problem discussed above. It is an object of the present invention to efficiently assign channel capacity by taking into consideration channel conditions and quality of service, and furthermore to reduce a delay time.

SUMMARY OF THE INVENTION

According to one aspect, the present invention is directed to a radio channel assigning device comprising: queueing-time distribution detecting means (21) for detecting a queueing-time distribution of transmission data, said transmission data being queued in each of a plurality of terminal stations which communicate with a base station via radio communication channels; and channel assigning means (22) for controlling assignment capacity of the radio communication channels based on the queueing-time distribution detected by said queueing-time distribution detecting means.

According to a further aspect, the present invention is directed to a radio channel assigning device comprising: queueing-time distribution detecting means (21) for detecting a queueing-time distribution of transmission data, said transmission data being queued in terminal stations that communicate with a base station via radio communication channels; channel-condition monitoring means (20) for monitoring conditions of the radio communication channels; and channel assigning means (22) for controlling assignment capacity of the radio communication channels based on the queueing-time distribution detected by said queueing-time distribution detecting means and on the channel conditions monitored by said channel-condition monitoring means.

According to a further aspect, the present invention is directed to a radio channel assigning device comprising: queueing-state detecting means (101) for detecting a queueing state of transmission data, said transmission data being queued in terminal stations that communicate with a base station via radio communication channels; channel-condition monitoring means (20) for monitoring conditions of the radio communication channels; and channel assigning means (22) for controlling assignment capacity of the radio communication channels based on the queueing state detected by said queueing-state detecting means and on the channel conditions monitored by said channel-condition monitoring means.

According to a further aspect, the present invention is directed to the radio channel assigning device, wherein said queueing-time distribution detecting means (21) detects the queueing-time distribution of the transmission data being queued in the terminal stations, based on the amount of transmission data generated in said plurality of terminal stations and on the amount of data which has been transmitted to the base station.

According to a further aspect, the present invention is directed to the radio channel assigning device, wherein said channel assigning means (22) gives priority to said terminal stations and also controls the assignment capacity of said radio communication channels between said terminal stations and said base station, based on the priority and the conditions of the radio communication channels monitored by said channel-condition monitoring means (20).

BRIEF DESCRIPTION OF THE DRAWINGS

The present invention will become more fully understood from the detailed description given hereinbelow and the accompanying drawings which are given by way of illustration only, and thus are not limitative of the present invention, and wherein:

FIG. 1 shows a system configuration of a radio channel assigning device according to an embodiment of the present invention;
FIG. 2 shows an example of generating an assignment request table according to the embodiment of the present invention;
FIGS. 3A to 3D are diagrams illustrating internal states of a assignment request table according to the embodiment of the present invention;
FIG. 4 illustrates generating an assignment request table according to the embodiment of the present invention;
FI GS. 5A to 5D illustrate giving priority to all data which has been divided based on a queueing-time distribution according to the embodiment of the present invention;
FIG. 6 shows the relationship between a queueing time and priority;
FIGS. 7A to 7D illustrate giving priority based on an acceptable delay time according to the embodiment of the present invention;

FIG. 8 shows the relationship between an acceptable delay time and priority;

FIGS. 9A to 9D illustrate giving priority based on the type of services set according to the embodiment of the present invention:

FIGS. 10A to 10D illustrate giving priority based on channel conditions;

FIG. 11 is a system configuration of a radio channel assigning device according to another embodiment of the present invention;

FIGS. 12A to 12D show states of an assignment request table;

FIG. 13 shows a system configuration of a radio channel assigning device for performing retransmission process according to another embodiment of the present invention;

FIG. 14 is a sequence diagram associated with the operation of retransmission process according to the embodiment of the present invention;

FIG. 15 is an example of a frame configuration used in a conventional dynamic TDMA;

FIG. 16 is a system configuration of a radio channel assigning device using a conventional dynamic TDMA:

FIG. 17 shows a conventional assignment request table;

FIG. 18 is a sequence diagram illustrating the operation of a conventional radio channel assignment;

FIG. 19 is a system configuration of a conventional radio channel assigning device for performing retransmission process;

FIG. 20 is a diagram showing a probability distribution of data in every queueing time;

FIG. 21 is a flowchart showing operation of a radio channel assigning device according to a first embodiment of the present invention; and

FIG. 22 is a flowchart showing operation of a radio channel assigning device according to a third embodiment of the present invention.

## DETAILED DESCRIPTION OF THE PREFERRED EMBODIMENTS

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

Embodiments of the present invention will be explained below with reference to the accompanying drawings.

### First Embodiment

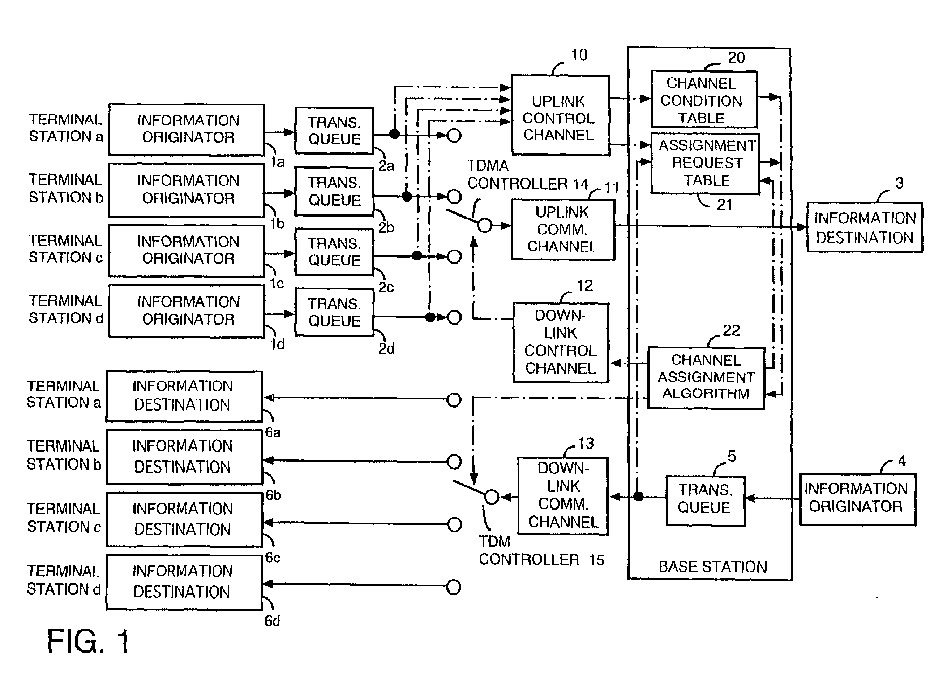

FIG. 1 shows a system configuration of a radio channel assigning device according to a first embodiment of the present invention. In FIG. 1, four terminal stations a, b, c and d communicate with a base station.

In FIG. 1, a channel condition table 20 monitors channel conditions between the terminal stations and the base station, an assignment request table 21 detects a queueing time of data which is queueing in the respective terminal stations, and a channel assignment algorithm 22 controls assignment capacity of communication channels, based on both the channel conditions monitored by the channel condition table 20 and the queueing-time distribution detected by the assignment request table 21. Note that the device, like a conventional system, has the information originators 1a - 1d, the transmission queues 2a - 2d, the information destination 3, the information originator 4, the transmission queue 5, the information destinations 6a - 6d, the uplink control channel 10, an uplink communication channel 11, a downlink control channel 12, a downlink communication channel 13, a time-division multiple access (TDMA) controller 14, and a time-division multiplex (TDIVI) controller 15.

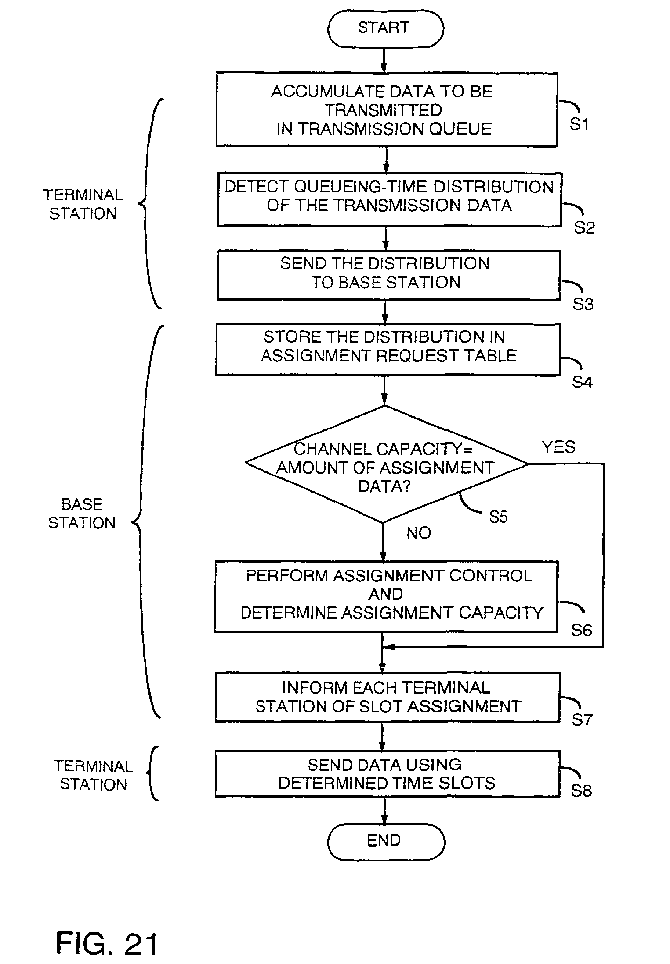

The operation of the above device will be explained below with reference to the flowchart shown in FIG. 21. Data generated in the information originator 1a of the terminal station a is accumulated in the transmission queue 2a (at step S1 of FIG. 21). The same process takes place in other terminal stations b, c and d. The respective terminal stations send the queueing-time distribution of the data queued in the transmission queues 2a - 2d to the base station, over the uplink control channel 10, as an assignment request. Note that the queueing-time distribution of data, for example, the amount of data for every queueing time is described in the units of the number of slots required for transmitting the respective data (steps S2 and S3).

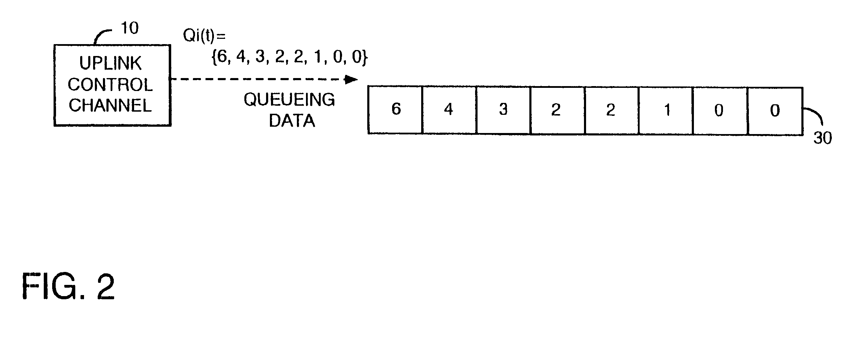

The base station receives the assignment request of the respective terminal stations via the uplink control channel 10, and stores the request in the assignment request table 21 (step S4). FIG. 2 illustrates the relationship between the information to be sent over the uplink control channel 10 and the assignment request table 21 with respect to one terminal station. In FIG. 2, the portion 30 is associated with the terminal station i in the assignment request table 21, in which the amount of queueing data $Q_i(t)$ is stored for every queueing time t. The queueing data $Q_i(t)$ is sent over the uplink control channel 10 for every queueing time, and the queueing data is stored in the assignment request table 21.

After the assignment request of the respective terminal stations is stored in the assignment request table 21, the channel assignment algorithm 22 determines capacity of the communication channels which is assigned to the respective terminal stations, by using the information stored in the assignment request table 21.

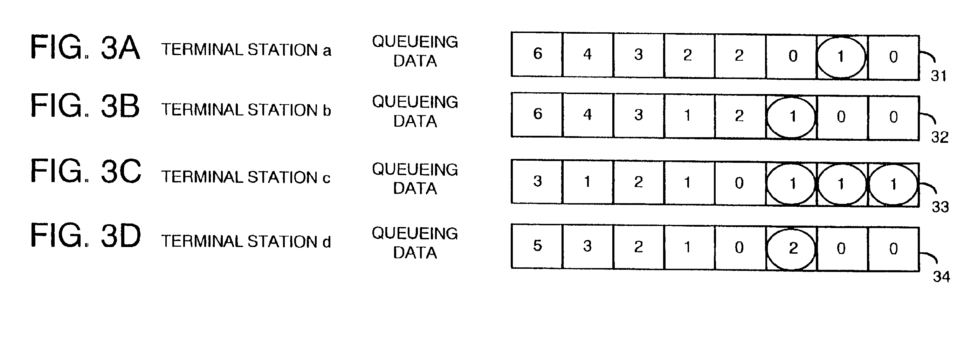

FIGS. 3A to 3D illustrate the contents of the assignment request table 21. Explained below is the algorithm which determines capacity of the communication channels to be assigned, based on the queueing-time distribution of the data stored in the assignment request table 21. Reference numerals 31, 32, 33 and 34 denote the amount of data $Q_i(t)$ for every, queueing time in the respective terminal stations, stored in the assignment request table 21. FIGS. 3A to 3D exemplify a case in which data with a longer queueing time is given priority in assigning capacity of the communication channels, in spite of the fact that the amount of the queueing data in all of the terminal stations is large or not. Assuming that capacity of the communication channels, that is, the number of slots is S, the capacity is assigned to the data in descending order of the queueing time, so that sum of the amount of the assigned data would be S (step S5 of FIG. 21). FIGS. 3A to 3D illustrate an example where S = 7, and channels are assigned to the circled data. More specifically, the terminal station a is assigned with one slot, the terminal station b with one slot, the terminal station c with three slots, and the terminal station d with two slots.

The channel assignment algorithm 22 determines capacity of the communication channels assigned to the respective terminal stations, and the slots of the uplink communication channel are controlled based on the determined capacity (step S6). In other words, a control signal for slot assignments of the uplink communication channel 11 is notified to the respective terminal stations through the downlink control channel 12 (step S7). Each of the terminal stations a to d transmits data, for example, by the use of the determined time slots on a frame, according to the notified assignment control signal, thus communicating the data through the uplink communication channel 11 (step S8). The base station receives the data transmitted from the respective terminal stations, and the received data is sent to an information destination 3.

Data generated in an information originator 4 is accumulated in a transmission queue 5. The assignment request table 21 is informed of the amount of data queued in the transmission queue 5, and the channel assignment algorithm 22 assigns the communication capacity of the downlink communication channel 13, for each of the terminal stations. The data is transmitted to the respective terminal stations through the downlink communication channel 13, according to the assigned communication capacity. The data finally reach the information destinations 6a - 6d.

The above-mentioned information destination 3 and the information originator 4 correspond, for example, to ATM terminals and the like, which are connected via a wire network.

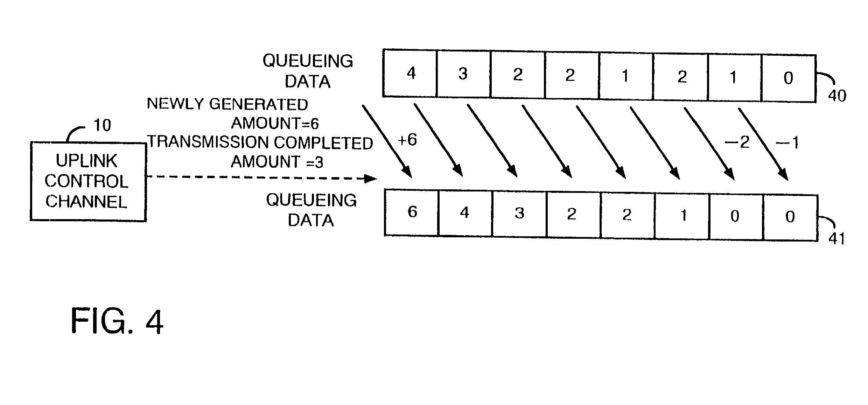

FIG. 4 illustrates another method of forming the assignment request table 21. The table is made, based on an assignment request which is transmitted through the uplink control channel 10. In FIG. 4, the portions 40 and 41 are associated with the terminal i in the assignment request table 21. The portion 41 indicates the current state, while the portion 40 indicates the state prior to the current one.

The amount of data newly generated in the respective terminal stations (the amount of newly generated data) and the amount of data which has been transmitted to the base station (the amount of transmission completed data) are respectively notified to the base station via the uplink control channel 10. In the channel condition table 20 of the base station, the latest contents in the portion 40 are shifted in time units, the amount of data corresponding to the transmission completed amount is deleted from the one with a longer queueing time, and then the newly generated amount is added to the one with a shorter queueing time. In this way, the assignment request table 21 is updated to have the current content in the portion 41, and the table stores the amount of queueing data $Q_i(t)$ with respect to every queueing time.

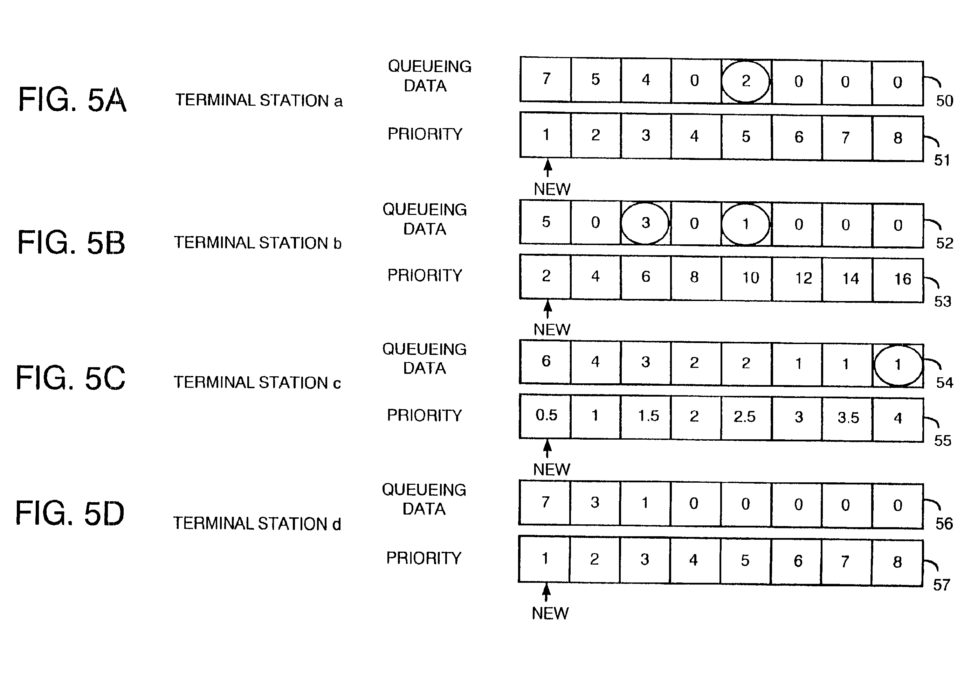

A case where priority is given to every data which is separated based on the queueing-time distribution, will be explained below with reference to FIGS.5A to 5D. In FIGS. 5A to 5D, numerals 50, 52, 54 and 56 denote the amount of queueing data $Q_i(t)$ in the respective terminal stations a to d at each queueing time, and numerals 51, 53, 55 and 57 denote the priority $P_i(t)$ given at each queueing time of the respective terminal stations a-d. In FIGS. 5A to 5D, the higher the value is, the higher the priority becomes.

FIGS. 5A to 5D illustrate an example where different priority is given to each terminal station. The terminal station b has the highest priority, while the lowest one is given to the terminal station c. In FIGS. 5A to 5D, the number of slots S in the communication channel is 7 and the slots are assigned in descending order of priority of the terminal station. FIGS. 5A to 5D exemplify the case where the terminal station a is assigned with two slots, the terminal station b with four slots, the terminal station c with one slot, and the terminal d with no slots.

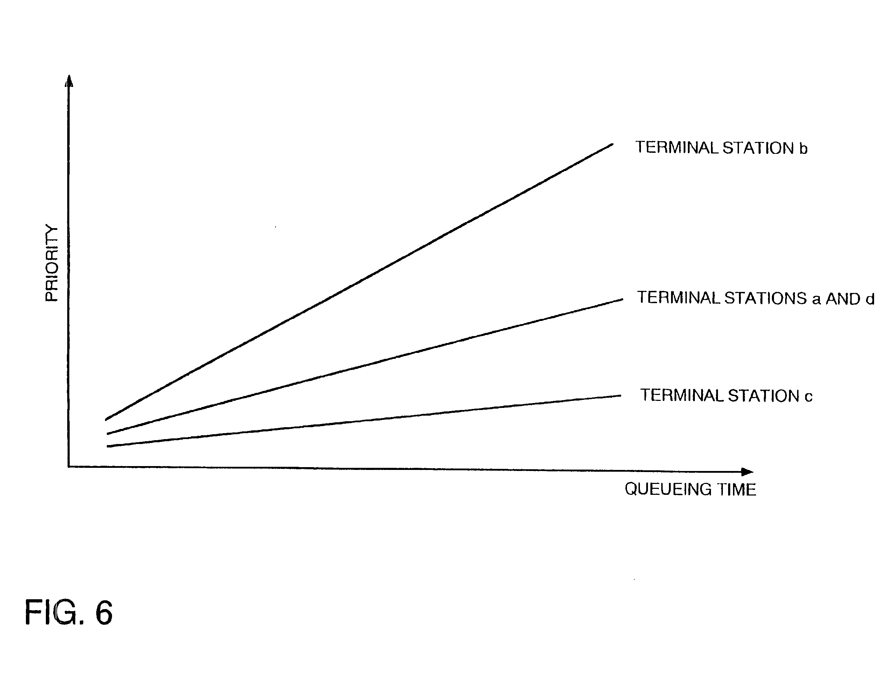

FIG. 6 illustrates for the respective terminal stations that the priority becomes higher as the queueing time becomes longer.

The above-explained assignment of the priority and the slot assignment based on the priority are performed by the channel assignment algorithm 22.

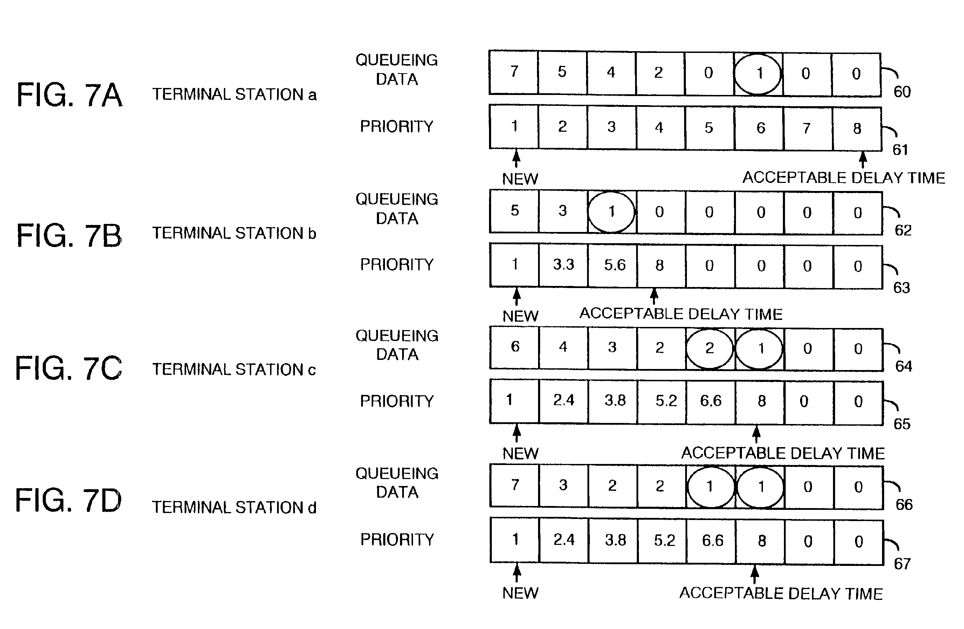

FIGS. 7A to 7D illustrate a case in which the priority is assigned to each data based on acceptable delay time of the data which is queueing in the respective terminal stations. Each data has been divided according to the queueing time distribution. In FIGS. 7A to 7D, numerals 60, 62, 64 and 66 denote the amount of queueing data $Q_i(t)$ in the respective terminal stations a - d at each queueing time, and numerals 61, 63, 65 and 67 denote the priority $P_i(t)$ given at each queueing time of the respective terminal stations a - d.

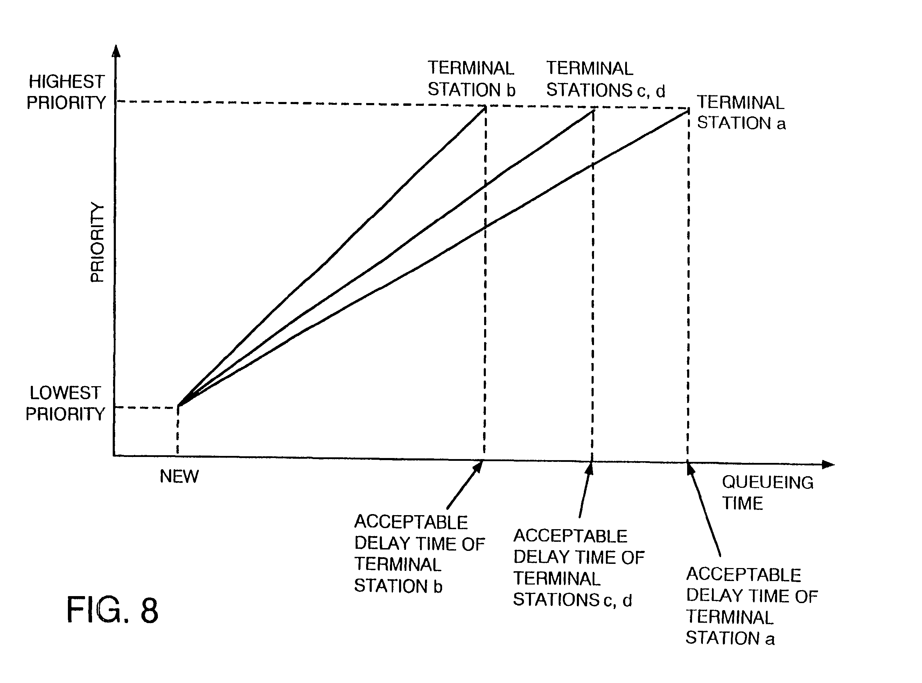

FIGS. 7A to 7D show a case where the respective terminal stations have different acceptable delay time. More specifically, the terminal station b has the shortest acceptable delay time, and the terminal station a has the longest acceptable delay time. The priority is calculated for the respective terminal stations in a manner as explained below. For the respective terminal stations, the lowest priority (which is "1 " in FIGS. 7A to 7D) is given in a time period whose queueing time is shortest. The highest priority on the other, is given to a time period whose queueing time is equal to the acceptable delay time. To time periods in-between these two periods, priorities obtained by performing a linear-interpolation on the highest and lowest priorities are given. FIG. 8 shows the relationship between the acceptable delay time and the priority.

FIGS. 7A to 7D exemplify the case in which the number of the slots S of the communication channel is 7, and the slots are assigned in descending order of priority of the terminal station. The terminal a is assigned with one slot, the terminal station b with one slot, the terminal station c with three slots, and the terminal station d with two slots.

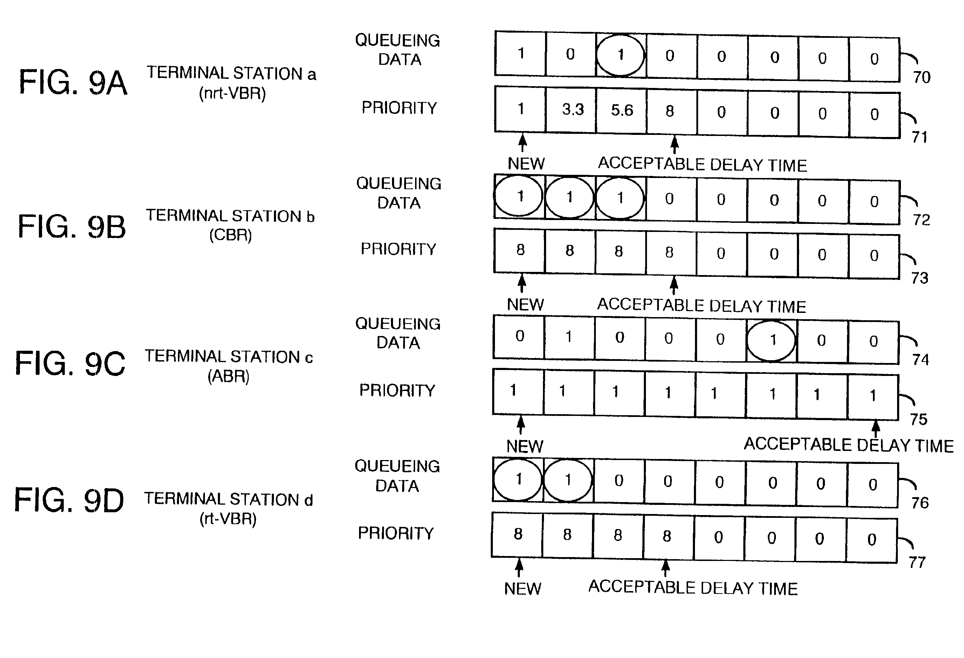

FIGS. 9A to 9D show a case in which various kinds of services such as CBR, rt-VBR, nrt-VBR, ABR, UBR and the like are provided in mixed fashion, and priority is given to each data according to the type of the services set to data which is being queued in the terminal station. Each data has been divided according to the queueing time distribution. In FIGS. 9A to 9D, numerals 70, 72, 74 and 76 denote the amount of queueing data $Qi(t)$ in the respective terminal stations a - d at each queueing time, and numerals 71, 73, 75 and 77 denote the priority $Pi(t)$ given at each queueing time of the respective terminal stations a - d.

In the example shown in FIGS. 9A to 9D, the terminal a is demanding the nrt-VBR service, the terminal b is demanding the CBR service, the terminal c is demanding the ABR service and the terminal d is demanding the rt-VBR service. Among these services, the CBR and rt-VBR require to be performed in real-time, therefore, the delay time should be as small as possible. Thus, within the range of acceptable delay time, the highest priority is always given to the terminal stations which are using the CBR and rt-VBR services. The nrt-VBR service does not require a real-time performance compared to the CBR or rt-VBR service, therefore, the highest priority is given to a time period whose queueing time is equal to the acceptable delay time. Furthermore, because the ABR and UBR services do not require a real-time performance, the lowest priority is always given to the terminal station which is using these services, within the range of acceptable delay time.

FIGS. 9A to 9D exemplify the case in which the number of the slots S of the communication channel is 7, and the slots are assigned in descending order of priority of the terminal station. However, there are plural items of data having a priority of "1", thus, the data with a long queueing time prevails as far as the priority is concerned. As a result, the terminal station a is assigned with one slot, the terminal station b with three slots, the terminal station c with one slot, and the terminal station d with two slots.

The operation using the channel condition table 20 of FIG.1 will be described below. The channel condition table 20 receives an assignment request from the uplink control channel 10. in the same manner as the assignment request table 21. The channel condition table 20 judges conditions of the channels for the respective terminal stations, based on the fact that whether the information associated with the control channel is normally received, then counts the number of sequences in which poor channel conditions have occurred. Based on the channel conditions, priority is given to each data which has been divided in conformity with the queueing-time distribution.

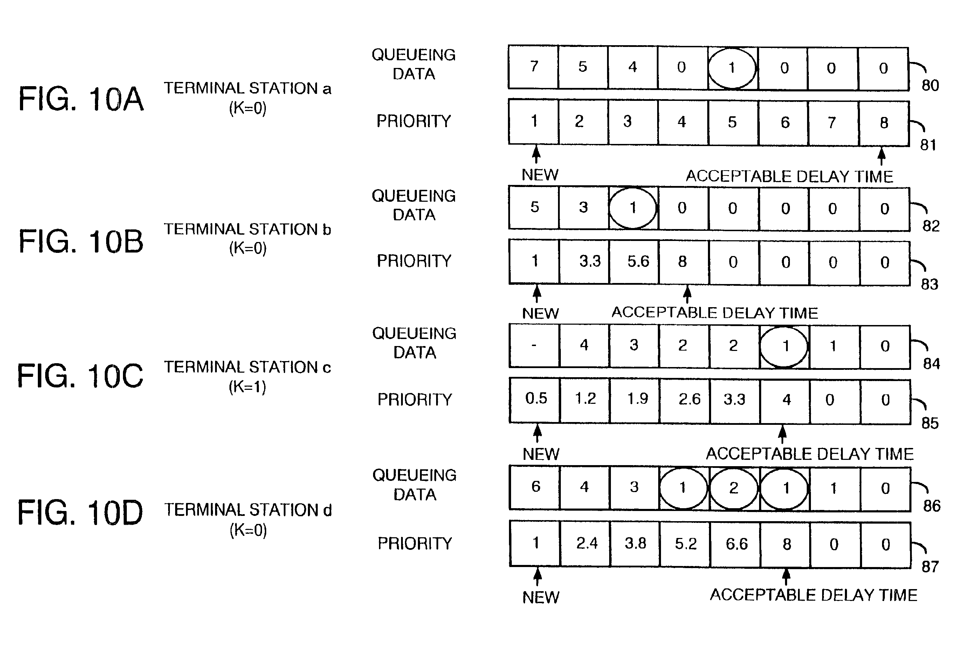

For example, FIGS. 10A to 10D show the case in which the amount of data newly generated in the terminal station c cannot be stored in the assignment request table 21, because the channel conditions between the base station and the terminal station c is poor. In FIGS. 10A to 10D, numerals 80, 82, 84 and 86 denote the amount of queueing data $Qi(t)$ in the respective terminal stations a - d at each queueing time, and numerals 81, 83, 85 and 87 denote the priority $Pi(t)$ given at each queueing time of the respective terminal stations a - d. If the amount of newly generated data cannot be stored in the assignment request table 21 because of the poor channel condition, the channel condition table 20 counts "1" as the number (K) of successive poor channel conditions.

FIGS. 10A to 10D illustrate the case in which the priority in each queueing time of the respective terminal stations is obtained from $Ci * Pi(t)$, and in which only the terminal station c holds $K = 1$, wherein $Ci$ is a coefficient indicating the channel conditions and $Ci = 2^{-K}$. The terminal station c had the same priority as the terminal station d, however, after $K = 1$ is obtained, the priority of the terminal station c is changed to the one indicated by a reference numeral 85. In FIGS. 10A to 10D, the number of slots S of the communication channel is 7, and as a result, the terminal station a is assigned with one slot, the terminal station b with one slot, the terminal station c with one slot, and the terminal station d with four slots.

As explained above, because the assignment request table 21 detects the queueing time of data which is queueing in the respective terminal stations, and the channel assignment algorithm 22 controls the assignment capacity of the communication channels, based on a queueing-time distribution detected by the assignment request table 21, it is possible to detect a queueing-time distribution of the transmission data. It is therefore possible to cope precisely with the delay time for the respective terminal stations, by processing the transmission data in descending order of a queueing time. Accordingly, with respect to the amount of queueing data in the respective terminal stations, a channel assignment is not collectively done, as has been performed in a conventional system, and the terminal station having queueing data whose amount is small as a whole, though its queueing time is long, is capable of being assigned capacity of communication channels. Hence, it is prevented that delay time of the data in the terminal station becomes longer and a transmission efficiency deteriorates by discarding the data. Moreover, by detecting a queueing-time distribution of the transmission data which is queueing in a terminal station, based on both the amount of transmission data generated in the terminal station and the amount of data transmitted to the base station, and forming the assignment request table 21 by using a difference of the queueing-time distribution of the transmission data in every time unit, it is possible to effectively detect the queueing-time distribution of the transmission data.

In addition, by giving priority to each transmission data which has been divided based on the queueing-time distribution, and controlling assignment capacity of the wireless, or radio communication channels between the terminal stations and the base station based on the given priority, it is possible to process the transmission data in descending order of the priority. This realizes a more flexible communication corresponding to the priority of the transmission data.

Moreover, priority is given to each transmission data which has been divided conforming to a queueing-time distribution, based on acceptable delay time of the transmission data which is queueing in the terminal station. In this manner, it is possible to process the transmission data in ascending order of the acceptable delay time and to enable a more flexible wireless communication which takes into account the acceptable delay time.

Furthermore, priority is given to each transmission data which has been divided based on a queueing-time distribution, depending on the type of services set to the transmission data which is queueing in the terminal station. In this way, it is possible to process the transmission data in descending order of priority, by taking into consideration the set service, and to enable a more flexible wireless communication suitable for the set service.

In addition, priority is given to each transmission data which has been divided according to a queueing-time distribution, based on conditions of the wireless communication channel between the terminal stations and the base station, which are stored in the channel condition table 20, and assignment capacity of the wireless communication channel is controlled based on the given priority. By adopting this method, it is possible to preferentially process the transmission data associated with good channel condition. This therefore prevents unnecessary slot assignment to the terminal stations with poor channel conditions, and permits assigning capacity of the wireless communication channels more efficiently.

Second Embodiment

In the first embodiment, as mentioned above, data associated with good channel conditions are preferentially processed, based on the channel conditions between the terminal stations and the base station, stored in the channel condition table 20 of FIGS. 10A to 10D. In a second embodiment, assignment capacity of the wireless communication is controlled dependent upon an assignment request stored in the assignment request table 101 (see FIG. 16), which detects a queueing state of the transmission data, that is, the size of the data in the terminal station, and upon the channel conditions stored in the channel condition table 20.

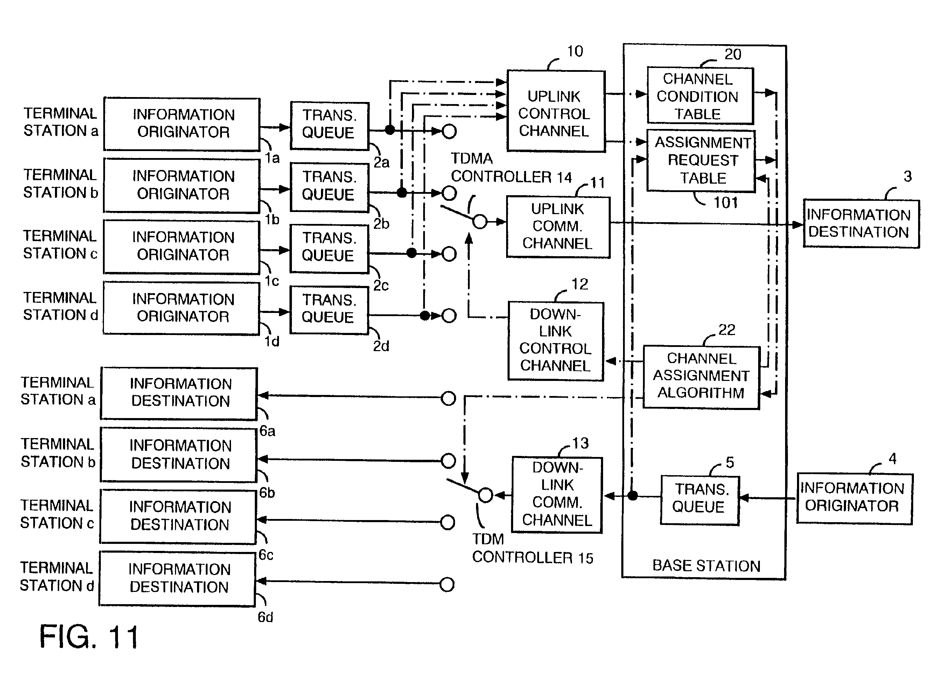

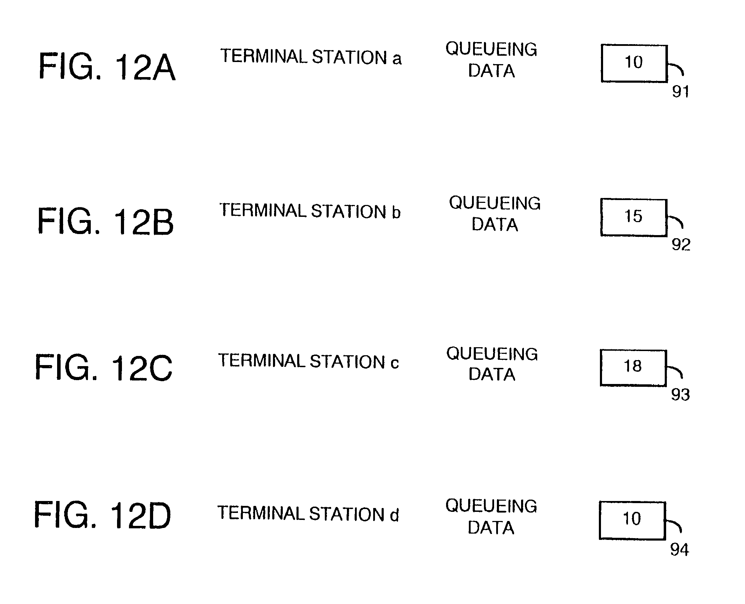

FIG. 11 shows a system configuration of a radio channel assigning device using the assignment request table 101 for storing the total amount of queueing data in the respective terminal stations, in the same manner as a conventional device, instead of using the assignment request table 21 of FIG. 1. Assuming that in FIG. 11, data Qi is queueing in a transmission queue of a terminal station i, the assignment request table 101 stores queueing data Qi for the respective terminal stations. FIGS. 12A to 12D illustrate information regarding the respective terminal stations in the assignment request table 101.

The channel assignment algorithm 22 controls assignment capacity of the wireless communication based on information in the assignment request table 101 and the channel conditions in the above-mentioned channel condition table 20. For example, the number of slots Si is assigned to the terminal station i in a manner presented by an equation below. In this manner, for a terminal station with good channel conditions, the assignment is proportional to the data Qi which is queueing in the transmission queue 2.

$$Si = S * Ci * Pi * Qi / \sum_{i=1}^{N} (Ci * Pi * Qi) \qquad (3)$$

In the above equation, S indicates the number of slots in the communication channel which is forming a frame, and N indicates the number of terminal stations. Ci is a coefficient showing the channel conditions. If the channel conditions are good, Ci is 1. however, if they are not good, Ci is 0. Pi is a coefficient indicating priority for the respective terminal stations. For example, the coefficient Pi takes the value between 0 and 1, in accordance with the degree of priority. However, if the priority is not given to each terminal station (in that case, each terminal station has an equal priority), Pi would be 1. Note that the priority for the respective terminal stations may be stored in the table 101, or another device may be provided for storing the priority.

If, for example, all of the terminal stations have the same priority (Pi = 1), and the channel conditions for the terminal station c are judged to be poor, according to contents in the channel condition table 20, then the channel assignment algorithm 22 controls the assignment as follows, by using Equation (3) based on the information stored in the assignment table 101 as illustrated in FIGS. 12A to 12D. That is, if the number of slots S of the communication channel is 7, two slots are assigned to the terminal station a, three slots to the terminal station b, no slots to the terminal station c, and two slots to the terminal station d. Later, if the channel conditions of the terminal station c are determined to recover from poor ones, according to the channel condition table 20, the channel assignment algorithm 22 assigns a particular number of slots of the communication channel to the terminal station c, using Equation (3). It should be noted that whether the channel conditions are good or poor, based on the channel condition table 20, may be judged in accordance with conditions every time the assignment request from the respective terminal stations is read out, or may be done by counting occurrence of poor channel conditions and comparing the counted result with a predetermined threshold.

It is also possible to employ a method in which a coefficient Ci indicating the channel conditions, is reduced in a stepwise manner according to the number of successive poor channel conditions. Assuming that the number of successive poor channel conditions is K and $Ci = 2^{-K}$, for example. Ci is gradually reduced to 0.5. 0.25 and 0.125, as the number K increases, then the assignment capacity of the wireless communication channel is gradually decreased accordingly. In this embodiment, the number of successive poor channel conditions is assumed to be K and $Ci = 2^{-K}$, however, the coefficient indicating the channel conditions may take other forms, as long as it can gradually reduce the assignment capacity of the wireless communication channel for the terminals with poor channel conditions.

In the above explanation, "1" is assigned as the priority Pi to all of the terminal stations. However, each terminal station may have a different priority Pi, and the number of slots Si to be assigned to the respective terminals stations may be obtained by using Equation (3).

The priority (Pi in Equation (3)) provided for the respective terminal stations may be determined in a manner that the terminal station which requires preferential communication should have a higher priority, based on the services set to the respective terminal stations, or may be determined in other ways.

As explained above, by controlling assignment capacity of the wireless communication channel based on the channel conditions stored in the channel condition table 20, it is possible to avoid assignment of capacity of the wireless communication channel to the terminal station which has poor channel conditions and to reduce assignment capacity in a stepwise manner according to the number of times that poor channel conditions have been detected, thus assigning capacity of the wireless communication channel by taking into consideration channel conditions and at the same time communicating efficiently.

Also, by giving priority to each terminal station and controlling assignment capacity of wireless communication channels between the terminal stations and the base station based on both the given priority and channel conditions stored in the channel condition table 20, it is possible to preferentially process transmission data which is queueing in the terminal station with a higher priority and with good channel conditions. In addition, even when terminal stations with a low priority and good channel conditions and terminal stations with a high priority and poor channel conditions co-exist, it is possible to control precisely to which terminal station the slots should be assigned preferentially. This means it is possible to perform a flexible communication according to the channel conditions and the priority given to the terminal station.

Furthermore, because each terminal station is provided with priority based on type of services set to transmission data which is queueing in the terminal station, it is possible to process the transmission data in descending order of priority in considering the set services, thus performing a flexible wireless communication according to type of the set services.

According to the present embodiment, assignment capacity of the wireless communication channels is controlled based on assignment request stored in the conventional assignment request table 101 and on channel conditions stored in the channel condition table 20. It is also possible to avoid assignment of the wireless communication channels to a terminal station with poor channel conditions, or to reduce assignment capacity in a stepwise manner according to the number of successive poor channel conditions dependent upon a queueing-time distribution detected by the assignment request table 21 associated with the first embodiment, and dependent upon channel conditions stored in the channel condition table 20.

Third Embodiment

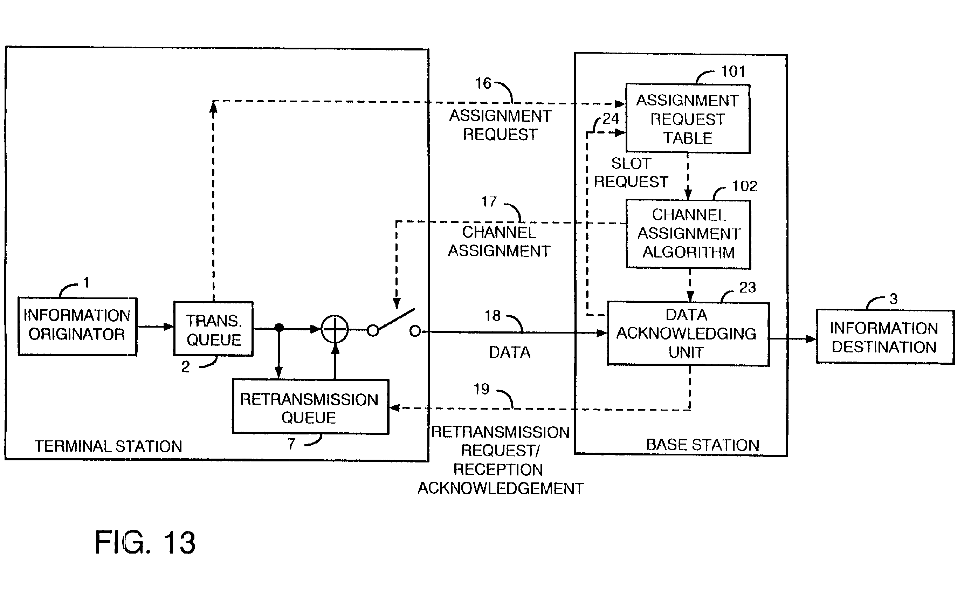

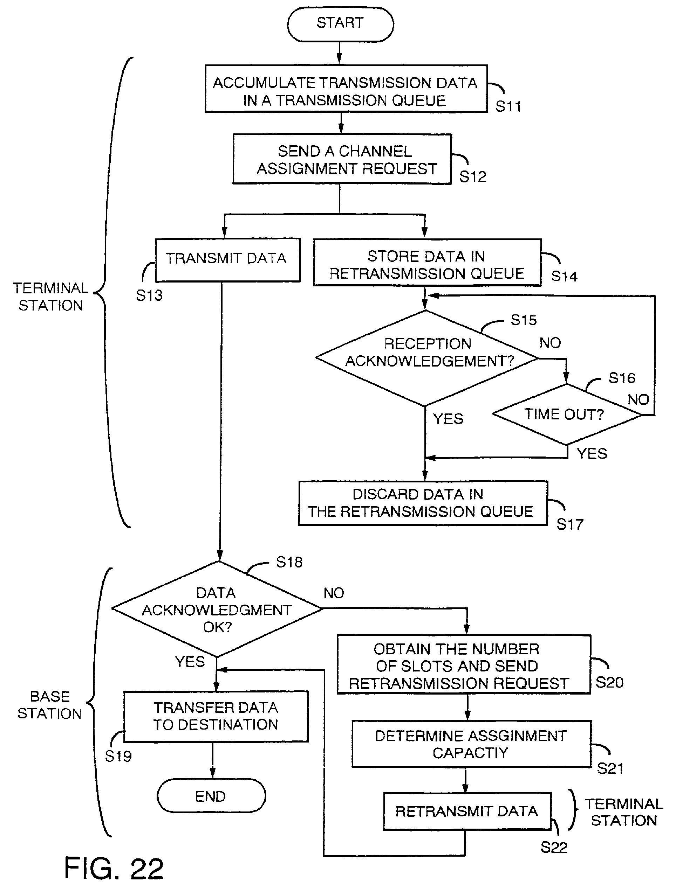

In a third embodiment, a retransmission process is performed based on the automatic request for retransmission (ARQ) for reducing a delay time. FIG. 13 illustrates a system configuration for performing retransmission processing by using the ARQ according to the third embodiment of the present invention. FIG. 22 is a flowchart showing the retransmission process according to the third embodiment.

When there is deletion in transmission data sent from a terminal station, a data acknowledging unit 23 of FIG. 13 acts as a retransmission assignment requesting means for requesting assignment of radio-communication-channel capacity for communicating data to be retransmitted. Other elements of FIG. 13 are identical to those in FIG. 19.

Data generated in the information originator 1 of FIG. 13 is stored in the transmission queue 2 (as described in step S11 of FIG. 22). The terminal station transmits a channel assignment request 16 to the base station, based on the data queueing in the transmission queue 2 (step S12), and transmits the data according to the channel assignment 17 sent from the base station (step S13). Data which has been transmitted are also transferred to and stored in the retransmission queue 7 (step S14), until the terminal station receives the reception acknowledgement 19 from the base station.

In the base station, the data acknowledging unit 23 acknowledges validity and order of the received data (step S18). Upon acknowledgment, the data is transferred to the information destination 3 (step S19), the reception acknowledgement 19 is sent to the terminal station, and the data whose reception has been acknowledged is discarded from the retransmission queue 7. On the contrary, if it is not acknowledged that the data has been received, retransmission process as shown in steps S20 and S21 is performed for the data whose reception could not be acknowledged. In the retransmission process, the data acknowledging unit 23 first obtains the number of slots needed for communicating the data associated with the retransmission, from the channel assignment algorithm 102 (the channel assignment algorithm 102 knows how much channel capacity has been assigned to which terminal station). Second, the data acknowledging unit 23 outputs the slot request 24 to the assignment request table 101 based on the number of these slots, so that the terminal station can transmit the retransmission data. At the same time, the data acknowledging unit 23 transmits a retransmission request to the terminal station.

The assignment request table 101 stores the total sum of both the data in the transmission queue requested by the terminal station via the assignment request 16 and the retransmission data requested by the data acknowledging unit 23. Based on the total amount of the summed data, the channel assignment algorithm 102 determines assignment capacity of the wireless communication channels. Upon reception of the retransmission request 19, the terminal station transmits (re-transmits) the data queued in the retransmission queue 7. according to the channel assignment 17 which is received in parallel with the retransmission request 19 (step S22 of FIG. 22). With respect to the data (including the retransmission data) associated with reception of the reception acknowledgment 19, the data correspondingly stored in the retransmission queue 7 are discarded.

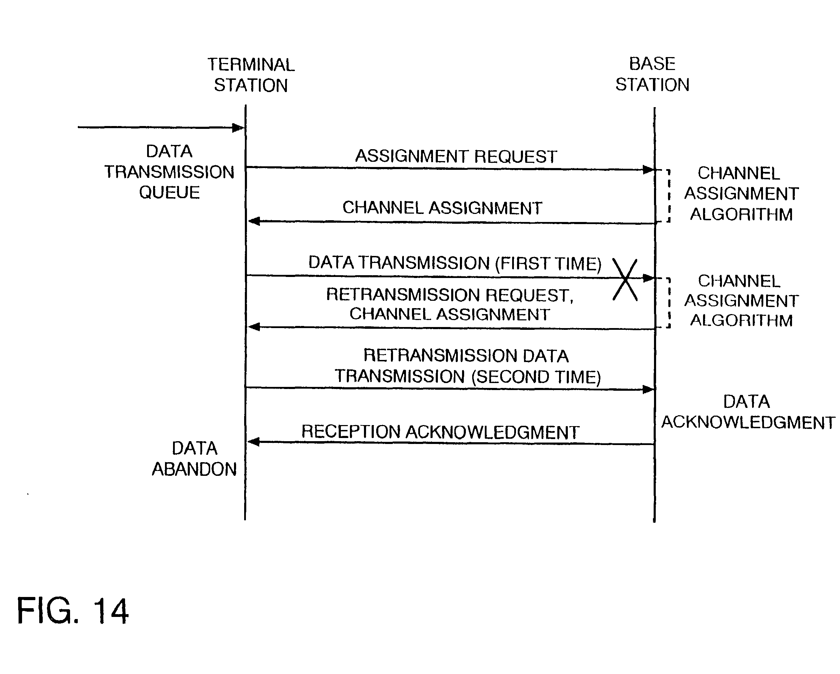

FIG. 14 is a sequence diagram illustrating the operation explained above. Data generated in the terminal station is queued in the transmission queue 2. When the transmission queue 2 has queuing data, the terminal station sends the assignment request to the base station and transmits data to the base station according to the channel assignment received from the base station. The data transmitted is stored in the retransmission queue 7 until the reception acknowledgement is received from the base station, or a normal transmission is abandoned because of the time-out.

The example shown in FIG. 14 illustrates a case where the first data transmission is not completed for reasons such as poor channel conditions, and the retransmission request is informed of from the base station. The base station sends the retransmission request and the channel assignment to the terminal station. The terminal station then transmits the data for the second time, according to the channel assignment received from the base station. After the reception acknowledgment is received, the corresponding data is discarded from the retransmission queue 7.

The present embodiment employs the conventional assignment request table 101 and the channel assignment algorithm 102. However, the assignment request table 21 and the channel assignment algorithm 22 as shown in the first embodiment of the present invention can also be used, so as to obtain similar effects.

As explained above, when data being communicated between the terminal station and the base station are deleted, the data acknowledging unit which acts as a retransmission assignment request device for requiring, from the assignment request table, an assignment request of the radio-communication-channel capacity for transmitting the retransmission data, is provided to make it possible to immediately assign channels for the communication of retransmission data and to reduce a delay time. In other words, a conventional sequence such as a retransmission request (at the base station)→ian assignment request (at the terminal station)→ a channel assignment (at the base station)→ retransmission (at the terminal station) is simplified to a sequence such as a retransmission request and channel assignment (at the base station) → retransmission (at the terminal station), which makes the retransmission process faster.

**Claims**

1.  A radio channel assigning device for assigning radio communication channels for transmitting data between a plurality of terminal stations (1a-1d) and a base station, said transmission data being queued in each of said terminal stations communication with said base station via said radio communication channels, comprising channel assigning means (22) for controlling assignment capacity of the radio communication channels, **characterized by** further comprising:

queuing-time distribution detecting means (21) for detecting a queuing-time distribution of said transmission date queued in said terminal stations (1a - 1d);

channel-condition monitoring means (20) for monitoring conditions of the radio communication channels;

said channel assigning means (22) controlling assignment capacity of the radio communication channels based on the queuing-time distribution detected by said queuing-time distribution detecting means (21) and on the channel conditions monitored by said channel-condition monitoring means (20).

2.  The radio channel assigning device according to claim 1, wherein said queueing-time distribution detecting means (21) detects the queueing-time distribution of the transmission data being queued in the terminal stations (1a-1d), based on the amount of transmission data generated in said plurality of terminal stations and on the amount of data which has been transmitted to the base station.

3.  The radio channel assigning device according to claim 1, wherein said channel assigning means (22) gives priority to said terminal stations (1a-1d) and also controls the assignment capacity of said radio communication channels between said terminal stations and said base station, based on the priority and the conditions of the radio communication channels monitored by said channel-condition monitoring means (20).

4.  The radio channel assigning device according to any one of claims 1 or 2 and 4, wherein said channel assigning means (22) gives priority to respective transmission data divided in conformity with the queueing-time distribution, based on acceptable delay time of the transmission data being queued in said terminal stations (1a-1d).

5.  The radio channel assigning 3, device according to claim 3, wherein said channel assigning means (22) gives said priority to the transmission data being queued in said terminal stations, based on a type of services set.

6.  The radio channel assigning device according to any one of claims 1 to 5, wherein said channel assigning means (22) controls the assignment capacity of said radio communication channels between said terminal stations (1a-1d) and said base station every predetermined time period, and controls to halt assignment of the radio communication channels for a terminal station whose communication state is judged to be abnormal by said channel-condition monitoring means, until a next timing when the assignment capacity of the radio communication channels is controlled.

7.  The radio channel assigning device according to any one of claims 1 to 5, wherein said channel assigning means (22) controls the assignment capacity of said radio communication channels between said terminal stations (1a-1d) and said base station every predetermined time period, and controls the assignment capacity in a stepwise manner to reduce capacity of the radio communication channels to be assigned to a terminal station whose communication state is judged to be abnormal by said channel-condition monitoring means, based on a number of times that the communication state is detected to be abnormal.

8.  The radio channel assigning device according to any one of claims I to 7, further comprising retransmission-assignment requesting means (23) for requesting said queuing-time distribution detecting means (21) to assign capacity of the radio communication channels for communicating transmission data to be retransmitted, if data communicating between said plurality of terminal stations (1a-1d) and said base station is deleted.

**Patentansprüche**

1.  Funkkanal-Zuweisungsvorrichtung zum Zuweisen von Funkkommunikationskanälen für die Übertragung von Daten zwischen mehreren Endgerätestationen (1a bis 1d) und einer Basisstation, welche Übertragungsdaten in einer Warteschlange angeordnet werden bei der Kommunikation von jeder der Endgerätestationen mit der Basisstation über die Funkkommunikationskanäle, aufweisend Kanalzuweisungsmittel (22) zum Steuern der Zuweisungskapazität der Funkkommunikationskanäle, **dadurch gekennzeichnet, dass** sie weiterhin aufweist:

Warteschlangenzeitverteilungs-Erfassungsmittel (21) zum Erfassen einer Warteschlangezeitverteilung der in den Endgerätestationen (1a bis 1d) in einer Warteschlange angeordneten Übertragungsdaten;

Kanalzustands-Überwachungsmittel (20) zum Überwachen der Zustände der Funkkommunikationskanäle;

wobei die Kanalzuweisungsmittel (22) die Zuweisungskapazität der Funkkommunikationskanäle steuern auf der Grundlage der von dem Warteschlangenzeitverteilungs-Erfassungsmitteln (21) erfassten Warteschlangenzeitverteilung und der von den Kanalzustands-Überwachungsmitteln (20) überwachten Kanalzustände.

2. Funkkanal-Zuweisungsvorrichtung nach Anspruch 1, bei der die Warteschlangenzeitverteilungs-Erfassungsmittel (21) die Warteschlangenzeitverteilung der in den Endgerätestationen (1a bis 1d) in einer Warteschlange angeordneten Übertragungsdaten erfasst auf der Grundlage der in den mehreren Endgerätestationen erzeugten Menge der Übertragungsdaten und der Menge von Daten, die zu der Basisstation übertragen wurden.

3. Funkkanal-Zuweisungsvorrichtung nach Anspruch 1, bei der die Kanalzuweisungsmittel (22) den Endgerätestationen (1a bis 1d) die Priorität gibt und auch die Zuweisungskapazität der Funkkommunikationskanäle zwischen den Endgerätestationen und der Basisstation steuert auf der Grundlage der Priorität und den Zuständen der von den Kanalzustands-Überwachungsmitteln (20) überwachten Zustände der Funkkommunikationskanäle.

4. Funkkanal-Zuweisungsvorrichtung nach einem der Ansprüche 1 oder 2, bei der die Kanalzuweisungsmittel (22) jeweiligen Übertragungsdaten, die in Übereinstimmung mit der Warteschlangenzeitverteilung geteilt sind, Priorität gibt auf der Grundlage einer annehmbaren Verzögerungszeit der Übertragungsdaten, die in den Endgerätestationen (1a bis 1d) in der Warteschlage angeordnet sind.

5. Funkkanal-Zuweisungsvorrichtung nach Anspruch 3, wobei die Kanalzuweisungsmittel (22) den in der Warteschlange in den Endgerätestationen angeordneten Übertragungsdaten Priorität auf der Grundlage eines gesetzten Typs von Dienstleistungen gibt.

6. Funkkanal-Zuweisungsvorrichtung nach einem der Ansprüche 1 bis 5, bei der die Kanalzuweisungsmittel (22) die Zuweisungskapazität der Funkkommunikationskanäle zwischen den Endgerätestationen (1a bis 1d) und der Basisstation bei jeder vorbestimmten Zeitperiode steuern und die Steuerung so durchführen, dass die Zuweisung der Funkkommunikationskanäle für eine Endgerätestation, deren Kommunikationszustand von den Kanalzustands-Überwachungsmitteln als anormal beurteilt wird, angehalten wird bis zu einem nächsten Zeitpunkt, zu welchem die Zuweisungskapazität der Funkkommunikationskanäle gesteuert wird.

7. Funkkanal-Zuweisungsvorrichtung nach einem der Ansprüche 1 bis 5, bei der die Kanalzuweisungsmittel (22) die Zuweisungskapazität der Funkkommunikationskanäle zwischen den Endgerätestationen (1a bis 1d) und der Basisstation bei jeder vorbestimmten Zeitperiode steuern, und die Zuweisungskapazität schrittweise steuern, um die Kapazität der zu einer Endgerätestation, deren Kommunikationszustand durch die Kanalzustands-Überwachungsmittel als anormal beurteilt wird, zuzuweisenden Funkkommunikationskanäle zu verringern, auf der Grundlage einer Anzahl von Malen, bei denen der Kommunikationszustand als anormal erfasst wird.

8. Funkkanal-Zuweisungsvorrichtung nach einem der Ansprüche 1 bis 7, weiterhin aufweisend Wiederübertragungszuweisungs-Anforderungsmittel (23), um die Warteschlangenzeitverteilungs-Erfassungsmittel (21) aufzufordern, Kapazität der Funkkommunikationskanäle für die Kommunikation von wieder zu übertragenden Übertragungsdaten zuzuweisen, wenn die zwischen den mehreren Endgerätestationen (1a bis 1d) und der Basisstation kommunizierten Daten gelöscht sind.

## Revendications

1. Dispositif d'affectation de canaux de radiocommunication pour la transmission de données entre une pluralité de stations terminales (1a-1d) et une station de base, lesdites données de transmission étant mises en file d'attente dans chacune desdites stations terminales communiquant avec ladite station de base par l'intermédiaire desdits canaux de radiocommunication, comprenant des moyens (22) d'affectation de canaux pour commander une capacité d'affectation des canaux de radiocommunication, **caractérisé en ce qu'**il comporte en outre :

des moyens (21) de détection de distribution de temps de mise en file d'attente pour détecter une distribution de temps de mise en file d'attente desdites données de transmission mises en file d'attente dans lesdites stations terminales (1a;1d);
des moyens (20) de contrôle des conditions de canaux pour contrôler des conditions des canaux de radiocommunication;
lesdits moyens (22) d'affectation de canaux commandant la capacité d'affectation des canaux de radiocommunication sur la base de la distribution de temps de mise en file d'attente détectée par lesdits moyens (21) de détection de la distribution de temps de mise en file d'attente et des conditions de canaux contrôlées par lesdits moyens (20) de contrôle des conditions des canaux.

2. Dispositif d'affectation de canaux de radiocommunication selon la revendication 1, dans lequel lesdits moyens de détection de distribution de temps de mise en file d'attente (21) détectent la distribution de temps de mise en file d'attente des données de transmission mises en file d'attente dans les stations terminales (1a-1d), sur la base de la quantité de données de transmission générées dans ladite pluralité de stations terminales et de la quantité de données qui a été transmise à la station de base.

3. Dispositif d'affectation de canaux de radiocommunication selon la revendication 1, dans lequel lesdits moyens d'affectation de canaux (22) donnent la priorité auxdites stations terminales (1a-1d) et commandent également la capacité d'affectation desdits canaux de radiocommunication entre lesdites stations terminales et ladite station de base, sur la base de la priorité et des conditions des canaux de radiocommunication contrôlés par lesdits moyens de contrôle des conditions des canaux (20).

4. Dispositif d'affectation de canaux de radiocommunication selon l'une quelconque des revendications 1 ou 2 et 4, dans lequel lesdits moyens d'affectation de canaux (22) donnent la priorité aux données de transmission respectives divisées en conformité avec la distribution de temps de file d'attente, sur la base d'un délai d'attente acceptable des données de transmission mises en file d'attente dans lesdites stations terminales (1a-1d).

5. Dispositif d'affectation de canaux de radiocommunication selon la revendication 3, dans lequel lesdits moyens d'affectation de canaux (22) donnent ladite priorité aux données de transmission mises en file d'attente dans lesdites stations terminales, sur la base d'un type d'ensembles de services.

6. Dispositif d'affectation de canaux de radiocommunication selon l'une quelconque des revendications 1 à 5, dans lequel lesdits moyens d'affectation de canaux (22) commandent la capacité d'affectation desdits canaux de radiocommunication entre lesdites stations terminales (1a-1d) et ladite station de base à chaque période de temps prédéterminée, et commandent l'arrêt de l'affectation des canaux de radiocommunication pour une station terminale dont l'état de communication est jugé anormal par lesdits moyens de contrôle des conditions des canaux, jusqu'à une prochaine synchronisation où la capacité d'affectation des canaux de radiocommunication sera commandée.

7. Dispositif d'affectation de canaux de radiocommunication selon l'une quelconque des revendications 1 à 5, dans lequel lesdits moyens d'affectation de canaux (22) commandent la capacité d'affectation desdits canaux de radiocommunication entre lesdites stations terminales (1a-1d) et ladite station de base à chaque période de temps prédéterminée, et commandent la capacité d'affectation de façon progressive afin de réduire la capacité des canaux de radiocommunications à être affectés à une station terminale dont l'état de communication est jugé anormal par lesdits moyens de contrôle des conditions des canaux, sur la base d'un nombre de fois où l'état de communication est détecté comme étant anormal.

8. Dispositif d'affectation de canaux de radiocommunication selon l'une quelconque des revendications 1 à 7, comprenant en outre des moyens de requête d'affectation de retransmission (23) destinés à demander auxdits moyens de détection de distribution de temps de mise en file d'attente (21) d'affecter la capacité des canaux de radiocommunication à la communication des données de transmission à retransmettre, si la communication des données entre ladite pluralité de stations terminales (1a-1d) et ladite station de base est supprimée.

FIG. 1

FIG. 2

EP 0 923 266 B1

FIG. 3A TERMINAL STATION a

QUEUEING DATA

| 6 | 4 | 3 | 2 | 2 | 0 | 1 | 0 | 31 |

FIG. 3B TERMINAL STATION b

QUEUEING DATA

| 6 | 4 | 3 | 1 | 2 | 1 | 0 | 0 | 32 |

FIG. 3C TERMINAL STATION c

QUEUEING DATA

| 3 | 1 | 2 | 1 | 0 | 1 | 1 | 1 | 33 |

FIG. 3D TERMINAL STATION d

QUEUEING DATA

| 5 | 3 | 2 | 1 | 0 | 2 | 0 | 0 | 34 |

QUEUEING
DATA

| 4 | 3 | 2 | 2 | 1 | 2 | 1 | 0 | 40 |

NEWLY GENERATED
AMOUNT=6

TRANSMISSION COMPLETED
AMOUNT =3

+6

−2 −1

UPLINK
CONTROL
CHANNEL

10

QUEUEING
DATA

| 6 | 4 | 3 | 2 | 2 | 1 | 0 | 0 | 41 |

FIG. 4

FIG. 5A  TERMINAL STATION a

QUEUEING DATA

| 7 | 5 | 4 | 0 | (2) | 0 | 0 | 0 | 50 |

PRIORITY

| 1 | 2 | 3 | 4 | 5 | 6 | 7 | 8 | 51 |

↑ NEW

FIG. 5B  TERMINAL STATION b

QUEUEING DATA

| 5 | 0 | (3) | 0 | (1) | 0 | 0 | 0 | 52 |

PRIORITY

| 2 | 4 | 6 | 8 | 10 | 12 | 14 | 16 | 53 |

↑ NEW

FIG. 5C  TERMINAL STATION c

QUEUEING DATA

| 6 | 4 | 3 | 2 | 2 | 1 | 1 | (1) | 54 |

PRIORITY

| 0.5 | 1 | 1.5 | 2 | 2.5 | 3 | 3.5 | 4 | 55 |

↑ NEW

FIG. 5D  TERMINAL STATION d

QUEUEING DATA

| 7 | 3 | 1 | 0 | 0 | 0 | 0 | 0 | 56 |

PRIORITY

| 1 | 2 | 3 | 4 | 5 | 6 | 7 | 8 | 57 |

↑ NEW

FIG. 6

TERMINAL STATION b

TERMINAL STATIONS a AND d

TERMINAL STATION c

QUEUEING TIME

PRIORITY

20

EP 0 923 266 B1

**FIG. 7A**  TERMINAL STATION a

QUEUEING DATA

| 7 | 5 | 4 | 2 | 0 | (1) | 0 | 0 | 60 |

PRIORITY

| 1 | 2 | 3 | 4 | 5 | 6 | 7 | 8 | 61 |

↑ NEW                    ↑ ACCEPTABLE DELAY TIME

**FIG. 7B**  TERMINAL STATION b

QUEUEING DATA

| 5 | 3 | (1) | 0 | 0 | 0 | 0 | 0 | 62 |

PRIORITY

| 1 | 3.3 | 5.6 | 8 | 0 | 0 | 0 | 0 | 63 |

↑ NEW    ↑ ACCEPTABLE DELAY TIME

**FIG. 7C**  TERMINAL STATION c

QUEUEING DATA

| 6 | 4 | 3 | 2 | (2) | (1) | 0 | 0 | 64 |

PRIORITY

| 1 | 2.4 | 3.8 | 5.2 | 6.6 | 8 | 0 | 0 | 65 |

↑ NEW                    ↑ ACCEPTABLE DELAY TIME

**FIG. 7D**  TERMINAL STATION d

QUEUEING DATA

| 7 | 3 | 2 | 2 | (1) | (1) | 0 | 0 | 66 |

PRIORITY

| 1 | 2.4 | 3.8 | 5.2 | 6.6 | 8 | 0 | 0 | 67 |

↑ NEW                    ↑ ACCEPTABLE DELAY TIME

FIG. 8

EP 0 923 266 B1

FIG. 9A  TERMINAL STATION a
(nrt-VBR)

QUEUEING DATA

| 1 | 0 | 1 | 0 | 0 | 0 | 0 | 0 |

70

PRIORITY

| 1 | 3.3 | 5.6 | 8 | 0 | 0 | 0 | 0 |

71

NEW          ACCEPTABLE DELAY TIME

FIG. 9B  TERMINAL STATION b
(CBR)

QUEUEING DATA

| 1 | 1 | 1 | 0 | 0 | 0 | 0 | 0 |

72

PRIORITY

| 8 | 8 | 8 | 8 | 0 | 0 | 0 | 0 |

73

NEW          ACCEPTABLE DELAY TIME

FIG. 9C  TERMINAL STATION c
(ABR)

QUEUEING DATA

| 0 | 1 | 0 | 0 | 0 | 1 | 0 | 0 |

74

PRIORITY

| 1 | 1 | 1 | 1 | 1 | 1 | 1 | 1 |

75

NEW                                      ACCEPTABLE DELAY TIME

FIG. 9D  TERMINAL STATION d
(rt-VBR)

QUEUEING DATA

| 1 | 1 | 0 | 0 | 0 | 0 | 0 | 0 |

76

PRIORITY

| 8 | 8 | 8 | 8 | 0 | 0 | 0 | 0 |

77

NEW          ACCEPTABLE DELAY TIME

EP 0 923 266 B1

EP 0 923 266 B1

**FIG. 10A** TERMINAL STATION a (K=0)

QUEUEING DATA

| 7 | 5 | 4 | 0 | (1) | 0 | 0 | 0 | 80 |

PRIORITY

| 1 | 2 | 3 | 4 | 5 | 6 | 7 | 8 | 81 |

↑ NEW      ACCEPTABLE DELAY TIME ↑

**FIG. 10B** TERMINAL STATION b (K=0)

QUEUEING DATA

| 5 | 3 | (1) | 0 | 0 | 0 | 0 | 0 | 82 |

PRIORITY

| 1 | 3.3 | 5.6 | 8 | 0 | 0 | 0 | 0 | 83 |

↑ NEW     ACCEPTABLE DELAY TIME ↑

**FIG. 10C** TERMINAL STATION c (K=1)

QUEUEING DATA

| - | 4 | 3 | 2 | 2 | (1) | 1 | 0 | 84 |

PRIORITY

| 0.5 | 1.2 | 1.9 | 2.6 | 3.3 | 4 | 0 | 0 | 85 |

↑ NEW      ACCEPTABLE DELAY TIME ↑

**FIG. 10D** TERMINAL STATION d (K=0)

QUEUEING DATA

| 6 | 4 | 3 | (1) | (2) | (1) | 1 | 0 | 86 |

PRIORITY

| 1 | 2.4 | 3.8 | 5.2 | 6.6 | 8 | 0 | 0 | 87 |

↑ NEW      ACCEPTABLE DELAY TIME ↑

FIG. 11

EP 0 923 266 B1

FIG. 12A    TERMINAL STATION a    QUEUEING DATA    10    91

FIG. 12B    TERMINAL STATION b    QUEUEING DATA    15    92

FIG. 12C    TERMINAL STATION c    QUEUEING DATA    18    93

FIG. 12D    TERMINAL STATION d    QUEUEING DATA    10    94

EP 0 923 266 B1

FIG. 13

EP 0 923 266 B1

TERMINAL
STATION

BASE
STATION

DATA
TRANSMISSION
QUEUE

ASSIGNMENT REQUEST

CHANNEL
ASSIGNMENT
ALGORITHM

CHANNEL ASSIGNMENT

DATA TRANSMISSION (FIRST TIME)

CHANNEL
ASSIGNMENT
ALGORITHM

RETRANSMISSION REQUEST,
CHANNEL ASSIGNMENT

RETRANSMISSION DATA
TRANSMISSION (SECOND TIME)

DATA
ACKNOWLEDGMENT

RECEPTION ACKNOWLEDGMENT

DATA
ABANDON

FIG. 14

EP 0 923 266 B1

SLOT

| PR | CONTROL INFO. |

SLOT

| PR | INFO. |

| PR | DOWNLINK CONTROL CHANNEL | DOWNLINK COMMUNICATION CHANNEL | UPLINK CONTROL CHANNEL | ULINK COMMUNICATION CHANNEL |

FRAME

FIG. 15 (PRIOR ART)

FIG. 16 (PRIOR ART)

EP 0 923 266 B1

FIG. 17 (PRIOR ART)

TERMINAL
STATION

BASE
STATION

DATA
TRANSMISSION
QUEUE

ASSIGNMENT REQUEST

CHANNEL
ASSIGNMENT
ALGORITHM

CHANNEL ASSIGNMENT

DATA TRANSMISSION (FIRST TIME)

RETRANSMISSION REQUEST

DATA
RETRANSMISSION
QUEUE

ASSIGNMENT REQUEST

CHANNEL
ASSIGNMENT
ALGORITHM

CHANNEL ASSIGNMENT

RETRANSMISSION DATA
TRANSMISSION (SECOND TIME)

DATA
ABANDON

RECEPTION ACKNOWLEDGMENT

DATA
ACKNOWLEDGMENT

FIG. 18 (PRIOR ART)

EP 0 923 266 B1

FIG. 19 (PRIOR ART)

FIG. 20

START

ACCUMULATE DATA TO BE
TRANSMITTED
IN TRANSMISSION QUEUE    S1

DETECT QUEUEING-TIME DISTRIBUTION
OF THE TRANSMISSION DATA    S2

TERMINAL
STATION

SEND THE DISTRIBUTION
TO BASE STATION    S3

STORE THE DISTRIBUTION IN
ASSIGNMENT REQUEST TABLE    S4

CHANNEL CAPACITY=
AMOUNT OF ASSIGNMENT
DATA?    S5    YES

BASE
STATION

NO

PERFORM ASSIGNMENT CONTROL
AND
DETERMINE ASSIGNMENT CAPACITY    S6

INFORM EACH TERMINAL
STATION OF SLOT ASSIGNMENT    S7

TERMINAL
STATION

SEND DATA USING
DETERMINED TIME SLOTS    S8

END

FIG. 21

START

ACCUMULATE TRANSMISSION DATA
IN A TRANSMISSION QUEUE — S11

SEND A CHANNEL
ASSIGNMENT REQUEST — S12

TRANSMIT DATA — S13

STORE DATA IN
RETRANSMISSION QUEUE — S14

RECEPTION
ACKNOWLEDGEMENT? — S15

NO

TIME OUT? — S16

NO

YES

YES

DISCARD DATA IN
THE RETRANSMISSION QUEUE — S17

TERMINAL
STATION

S18

DATA
ACKNOWLEDGMENT
OK?

NO

YES

OBTAIN THE NUMBER
OF SLOTS AND SEND
RETRANSMISSION REQUEST — S20

BASE
STATION

TRANSFER DATA
TO DESTINATION — S19

DETERMINE ASSGINMENT
CAPACTIY — S21

END

RETRANSMIT DATA — S22

TERMINAL
STATION

FIG. 22